# DEMANDE DE BREVET EUROPEEN

(11) **EP 1 441 304 A1**
(43) Date de publication de la demande: **28.07.2004**
(21) Numéro de dépôt: 03292482.1
(22) Date de dépôt: 08.10.2003
(51) Int. Cl.: G06K 19/06, G06K 1/12

(54) **Procédé d'appréciation de la conformité à son modèle d'une reproduction effectuée par impression**

(30) Priorité: 18.10.2002 FR 0212975
(71) Demandeur: Société Anonyme dite SMURFIT-SOCAR, 94160 Saint-Mandé (FR)
(72) Inventeur: Lambert, Jean-Paul, 18130 Dun sur Auron (FR)
(74) Mandataire: Jolly, Jean-Pierre

(57) **Abrégé**

L'invention concerne un procédé d'appréciation de la conformité à son modèle d'une reproduction (1) effectuée par impression, notamment par une impression flexographique, dans des conditions d'impression déterminées initialement par utilisation d'une jauge standard comprenant au moins une série de trames, chacune constituée de barres parallèles régulièrement espacées, l'espacement des barres variant d'une trame à une autre.

Selon l'invention, ce procédé consiste à juxtaposer au cliché destiné à l'impression une pluralité de trames (2) comprenant celle qui a été retenue pour fixer les conditions initiales d'impression et des trames dont les barres ont un espacement plus grand que cette dernière, à imprimer simultanément la reproduction désirée et les trames qui lui sont juxtaposées, et à déterminer visuellement ou à l'aide d'un appareil approprié à partir de quand la lisibilité de la trame choisie initialement ou celle d'une autre trame devient insuffisante, ce qui traduit une détérioration des conditions d'impression, par rapport aux conditions initiales.

## Description

La présente invention concerne un procédé d'appréciation de la conformité à son modèle d'une reproduction effectuée par impression, notamment par impression flexographique, en particulier de la conformité au modèle original d'un code à barres imprimé.

On sait que, quel que soit le type d'impression, divers paramètres influent sur la qualité de celle-ci, en particulier, l'encrage, la qualité du support d'impression et la pression du cliché sur ce support.

Pour une reproduction déterminée, ces paramètres sont donc définis avant impression et les conditions d'impression sont préréglées afin de s'y conformer.

En vue de faciliter la détermination de ces conditions, notamment lors de l'impression de codes à barres, diverses jauges ont été proposées dans la technique. On connaît, en particulier, les jauges standards commercialisées sous l'appellation EAN, par la Société GENCOD, qui sont constituées de fines trames, qui peuvent être fournies aux utilisateurs sous forme de films positifs ou négatifs. Les trames peuvent être associées par paires, chaque trame d'une paire comportant des barres parallèles espacées régulièrement, les barres d'une trame étant perpendiculaires à celles de l'autre trame, mais l'espacement des barres étant identique sur les deux trames. L'utilisation de barres perpendiculaires d'une trame à l'autre permet de prérégler les conditions d'impression à la fois dans la direction des presses d'impression et perpendiculairement à cette direction. Les barres peuvent être constituées de segments de droite soit continus, soit discontinus et constitués alors par exemple de traits ou de points alignés.

Les paires de trames de la jauge EAN sont au nombre de onze et désignées par des lettres de l'alphabet, de A à K, l'espacement des barres de chaque code allant en diminuant de la lettre A à la lettre K.

Ces jauges, utilisées dans des conditions bien précises, servent à la prédétermination des conditions d'impression, notamment par flexographie, en particulier de codes à barres.

Dans la pratique, on constate toutefois que les conditions ainsi définies à l'origine varient en cours d'impression et que la lisibilité initiale des reproductions obtenues peut varier considérablement au cours du temps. Dans le cas de l'impression d'un code à barres, il peut en résulter des conséquences sérieuses, se traduisant par des erreurs de lecture du code ainsi imprimé ou même par l'impossibilité de lire ce code.

L'invention vise à remédier à cet inconvénient en proposant une utilisation nouvelle de trames telles que celles définies ci-dessus, en vue de suivre l'évolution en temps réel en cours d'impression de la lisibilité des reproductions obtenues et de déterminer, par une simple observation visuelle ou à l'aide d'un appareillage connu en soi, s'il est nécessaire de modifier les conditions d'impression, pour retrouver la qualité fixée initialement.

A cet effet, l'invention a pour objet un procédé d'appréciation de la conformité à son modèle d'une reproduction effectuée par impression, notamment par une impression flexographique, dans des conditions d'impression déterminées initialement par utilisation d'une jauge standard comprenant au moins une série de trames, chacune constituée de barres parallèles régulièrement espacées, l'espacement des barres variant d'une trame à une autre, ce procédé consistant à juxtaposer au cliché destiné à l'impression une pluralité de trames comprenant celle qui a été retenue pour fixer les conditions initiales d'impression et des trames dont les barres ont un espacement plus grand que cette dernière, à imprimer simultanément la reproduction désirée et les trames qui lui sont juxtaposées, et à déterminer visuellement ou à l'aide d'un appareil approprié à partir de quand la lisibilité de la trame choisie initialement ou celle d'une autre trame parmi les trames imprimées devient insuffisante, ce qui traduit une détérioration des conditions d'impression, par rapport aux conditions initiales.

Ce procédé s'applique à tout mode d'impression (par flexographie, typographie, offset, lithographie, etc...), mais il convient particulièrement bien à la flexographie, pour laquelle les variations des caractéristiques des graphismes imprimés peuvent être importantes.

Le cliché destiné à l'impression auquel ont été juxtaposées les trames utilisées pour la mise en oeuvre du procédé ci-dessus constitue un autre objet de l'invention, de même que les supports ou objets revêtus d'une impression réalisée par ce procédé.

Au lieu d'une unique trame de chaque type juxtaposée au cliché à reproduire, on peut utiliser une paire de trames dont l'espacement des barres est identique, les barres d'une trame d'une paire étant perpendiculaires à celles de l'autre trame.

Le procédé conforme à l'invention s'applique à l'impression de tout type de cliché, mais il convient particulièrement bien au contrôle de la lisibilité d'un code à barres.

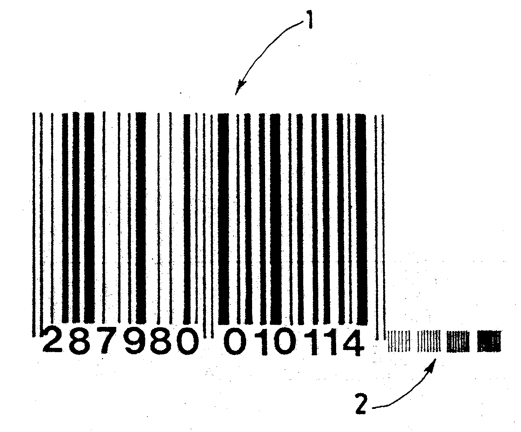

C'est ce qu'illustre la figure unique du dessin annexé, qui représente un tel code à barres 1, imprimé par exemple par flexographie en même temps que quatre trames 2 choisies parmi celles de la jauge standard EAN. L'une de ces trames, ici celle de droite, est celle qui a servi à prédéfinir les conditions d'impression et les trois autres sont les trames de la jauge voisines de la précédente et dont l'écartement des barres est de plus en plus grand. La lisibilité de l'impression peut ainsi être suivie à l'oeil nu à mesure que progresse cette impression, pour déterminer à quel moment de nouveaux réglages deviennent nécessaires, au moment où l'une des trames associées définie à l'avance devient illisible, ce qui traduit le besoin de modifier les conditions d'impression pour retrouver la qualité d'impression initiale.

Dans l'exemple représenté, la jauge de droite (celle dont l'écartement des barres est le plus petit) doit être nette, mais si elle devient sombre, le code à barres reste encore conforme à la lecture.

La deuxième jauge (à partir de la droite) ne doit pas devenir sombre et, si tel est le cas, l'opérateur doit intervenir sur trois paramètres, l'état de propreté des clichés, l'encrage, la pression cliché/carton.

Les deux jauges de gauche doivent toujours rester absolument claires, aucun défaut ou tache entre barres n'étant acceptable.

On notera que, pour certaines reproductions obtenues par impression, les trames ou paires de trames destinées à apprécier la conformité de l'impression peuvent être intégrées dans le cliché destiné à la reproduction, en étant ainsi confondues avec le reste de la reproduction, pour un observateur non averti.

Le procédé conforme à l'invention présente l'avantage d'être très facile à mettre en oeuvre, pratiquement sans aucun surcoût pour l'utilisateur, et de permettre le suivi à l'oeil nu de l'évolution des conditions d'impression.

## Revendications

1. Procédé d'appréciation de la conformité à son modèle d'une reproduction (1) effectuée par impression, notamment par une impression flexographique, dans des conditions d'impression déterminées initialement par utilisation d'une jauge standard comprenant au moins une série de trames, chacune constituée de barres parallèles régulièrement espacées, l'espacement des barres variant d'une trame à une autre, ce procédé consistant à juxtaposer au cliché destiné à l'impression une pluralité de trames (2) comprenant celle qui a été retenue pour fixer les conditions initiales d'impression et des trames dont les barres ont un espacement plus grand que cette dernière, à imprimer simultanément la reproduction désirée et les trames qui lui sont juxtaposées, et à déterminer visuellement ou à l'aide d'un appareil approprié à partir de quand la lisibilité de la trame choisie initialement ou celle d'une autre trame devient insuffisante, ce qui traduit une détérioration des conditions d'impression, par rapport aux conditions initiales.

2. Procédé selon la revendication 1, **caractérisé en ce que**, au lieu de juxtaposer au cliché à reproduire une pluralité de trames (2), on lui associe une pluralité de paires de trames (2), les barres des trames de chaque paire ayant un même écartement, mais les barres d'une trame de chaque paire étant perpendiculaires à celle de l'autre trame.

3. Procédé selon l'une des revendications 1 et 2, **caractérisé en ce que** les trames ou paires de trames (2) destinées à apprécier la conformité de l'impression sont intégrées dans le cliché destiné à la reproduction

4. Cliché destiné à une impression, auquel sont juxtaposées des trames ou paires de trame, pour la mise en oeuvre du procédé selon l'une des revendications 1 à 3.

5. Support ou objet revêtu d'une impression, obtenue par la mise en oeuvre du procédé selon l'une des revendications 1 à 3.
